(19) **Europäisches Patentamt**

**European Patent Office**

**Office européen des brevets**

(11) Veröffentlichungsnummer: **0 329 805**
**A1**

(12) **EUROPÄISCHE PATENTANMELDUNG**

(21) Anmeldenummer: **88102700.7**

(22) Anmeldetag: **24.02.88**

(51) Int. Cl.4: **F16L 41/02 , F02M 55/00**

(43) Veröffentlichungstag der Anmeldung:
**30.08.89 Patentblatt 89/35**

(84) Benannte Vertragsstaaten:
**DE ES FR GB IT NL SE**

(71) Anmelder: **Firma A. Raymond**
**Teichstrasse 57**
**D-7850 Lörrach(DE)**

(72) Erfinder: **Moretti, Erminio**
**Rue Clot-Bey Nr. 8**
**F-38028 Grenoble(FR)**

(74) Vertreter: **Kirchgaesser, Johannes**
**Bahnhofstrasse 3**
**D-7859 Efringen-Kirchen(DE)**

(54) **Rohrleitungssystem mit zwei Leitungssträngen.**

(57) Bei einem Rohrleitungssystem mit zwei Leitungssträngen und Kupplungseinrichtungen an den Enden Zum Anschließen von weiterführenden Verbindungsleitungen ist aus Gründen der Platzersparnis im Innern eines zylindrischen Außenrohres (1) ein Zweitrohr (2) angeordnet, dessen Außendurchmesser entsprechend dem benötigten Durchflußquerschnitt kleiner ist als der Innendurchmesser des Außenrohres (1). An beiden Enden des Doppelrohres (1, 2) befinden sich Kupplungseinrichtungen (3) mit jeweils einer Kupplungsstelle (4) zum Anschluß der Doppeleitung (1, 2) und jeweils zwei Kupplungsstellen (5, 6) zum Anschluß der weiterführenden Einfachleitungen (7, 8 bzw. 10, 11), wobei das Innenrohr (2) mit der einen Kupplungsstelle (5) und das Außenrohr (1) mit der anderen Kupplungsstelle (6) durch innerhalb der Kupplungseinrichtung (3) angeordnete Durchflußkanäle (15, 16, 17) verbunden ist.

Das innenliegende Zweitrohr (2) hierbei vorzugsweise lose im Außenrohr (1) angeordnet und steht an beiden Enden (18) um eine solche Länge über, die es ermöglicht, das Rohrende (18) durch einen zum Außenrohrkanal (15) abgedichteten Innenrohrkanal (16) bis in den Anfangsbereich der weiterführenden Einfachleitung (8) hinzuführen.

FIG. 2

Die Erfindung bezieht sich auf ein Rohrleitungssystem mit zwei Leitungssträngen und Kupplungseinrichtungen an den Enden zum Anschließen von weiterführenden Verbindungsleitungen.

Dieses Rohrleitungssystem findet beispielsweise Anwendung bei der Verlegung von Kraftstoffleitungen im Kraftfahrzeugbau, wobei die Vorlaufleitung und die Rücklaufleitung üblicherweise unterhalb des Bodenblechs in einem besonderen Kanal mittels spezieller Doppelleitungshalter verlegt werden, welche ihrerseits auf am Kanalboden abstehende Steckbolzen befestigt werden. Der nach unten offene Kanal im Bodenblech soll die Kraftstoffleitugen vor äußeren Einwirkungen wie beispielsweise durch Steinschlag schützen und erstreckt sich vom Motorraum bis zum Tank. Da häufig noch weitere Versorgungsleitungen wie beispielsweise die Bremsleitungen ebenfalls in dem Kanal untergebracht werden, muß dieser entsprechend breit ausgebildet sein, so daß die im Kanal verlegten Leitungen zumindest auf der Kanalbreite ungeschützt liegen. Auch ist das Verlegen der vielen Leitungen sehr mühsam und braucht entsprechend viel Zeit.

Aufgabe der Erfindung ist es daher, ein Rohrleitungssystem der eingangs erwähnten Art zu schaffen, welches einfacher zu montieren ist und zudem weniger Platz benötigt. Diese Aufgabe wird im wesentlichen mit den im Anspruch 1 genannten Mitteln gelöst. Hierdurch kann die Doppelleitung mit den beiden Kupplungseinrichtungen an den beiden Rohrenden bereits beim Hersteller vormontiert und an der Bandstraße als komplette Leitungseinheit in die am Kanalboden aufmontierten Leitungshalter eingedrückt werden. Dies spart kostbare Zeit an der Bandstraße und zudem Platz im Verlegekanal, so daß dieser etwas schmaler ausgeführt werden kann und daher mehr Schutz bietet. Auch ergibt sich bei den Leitungshaltern eine Einsparung, da diese nur noch für eine einzige Kraftstoffleitung die entsprechenden Halteschalen aufweisen müssen.

Es gibt nun verschiedene Möglichkeiten, ein Rohr mit einem innenliegenden Zweitrohr auszubilden, so beispielsweise durch eine Trennwand im Rohrkanal, die den Rohrquerschnitt in zwei gleiche oder auch ungleiche Querschnitte aufteilt, je nachdem, welche Durchflußquerschnitte benötigt werden.

Eine besonders einfache Doppelrohrausbildung ergibt sich nach einem weiteren Merkmal der Erfindung jedoch dadurch, daß im Außenrohr ein innenliegendes Zweitrohr lose angeordnet ist, das an beiden Enden etwas übersteht und zwar soviel, daß das Innenrohr durch einen besonders abgedichteten Durchgangskanal im Kupplungsgehäuse bis zur Einmündung in den Anfangsbereich der weiterführenden Einfachleitung geradlinig durchgeführt werden kann.

Weitere Merkmale der Erfindung ergeben sich aus den Unteransprüchen und sollen anhand eines in der Zeichnung dargestellten, bevorzugten Ausführungsbeispiels der Erfindung nachfolgend näher erläutert werden. Es zeigt

Fig. 1 das Rohrleitungssystem mit den weiterführenden Verbindungsleitungen zum Tank und zum Motor,

Fig. 2 eine am Ende der Doppelrohrleitung aufmontierte Kupplungseinrichtung im Schnitt und

Fig. 3 eine bevorzugte Ausführungsform des Doppelrohres im Schnitt.

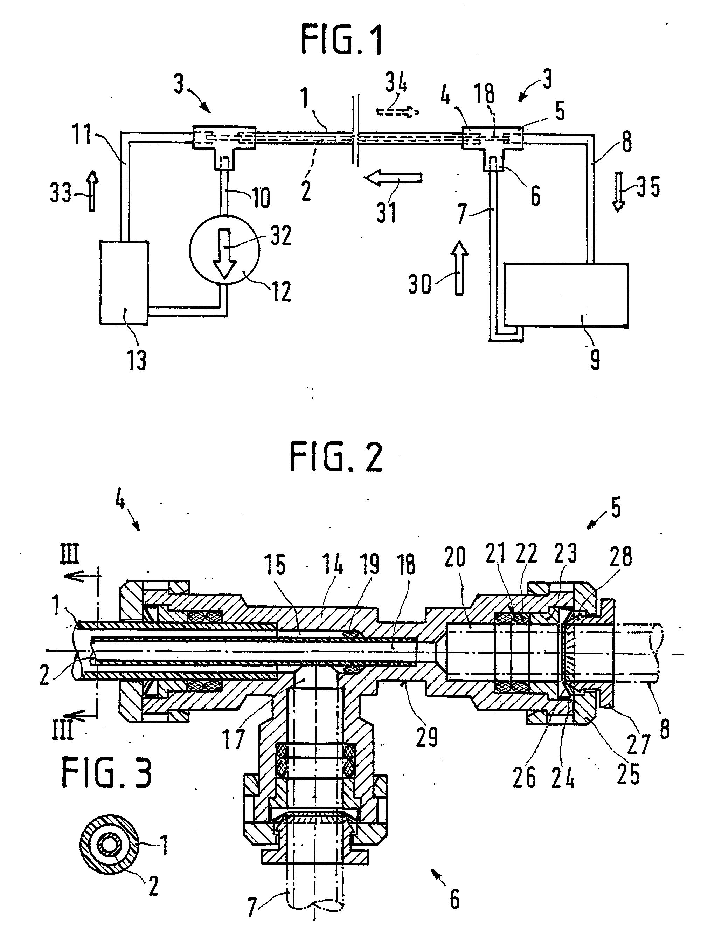

Das in Fig. 1 dargestellte Rohrleitungssystem besteht aus einem zylindrischen Außenrohr 1 und einem innenliegenden Zweitrohr 2 sowie Kupplungseinrichtungen 3, welche in noch zu beschreibender Weise auf den beiden Enden der Doppelrohrleitung 1, 2 aufgesteckt sind. Dieses vormontierte Rohrleitungssystem dient beim vorliegenden Ausführungsbeispiel zur Beförderung von Kraftstoff, wobei das Außenrohr 1 die Vorlaufleitung und das Innenrohr 2 die Rücklaufleitung bildet. Es versteht sich, daß dieses Rohrleitungssystem generell für alle Versorgungsleitungen aus Kunststoff verwendbar ist, bei denen es sich als zweckmäßig erweist, zwei Leitungen zu einer Doppelleitung zusammenzufassen.

Jede Kupplungseinrichtung 3 ist mit einer Kupplungsstelle 4 zur Aufnahme des Doppelrohres 1, 2 und den Kupplungsstellen 5 und 6 zur Aufnahme der weiterführenden Einfachleitungen 7, 8 sowie 10, 11 versehen. Der im Tankbehälter 9 befindliche Kraftstoff gelangt durch die Einfachleitung 7, die Vorlaufleitung 1 und die Einfachleitung 10 mittels einer Kraftstoffpumpe 12 in Richtung der Pfeile 30, 31 und 32 in den schematisch dargestellten Motor 13, während der überschüssige Kraftstoff durch die Einfachleitung 11, die Rücklaufleitung 2 und die Einfachleitung 8 in Richtung der Pfeile 33, 34 und 35 wieder in den Tank 9 zurückfließt.

Der Aufbau der Kupplungseinrichtung 3 richtet sich nach der Art des verwendeten Doppelrohres 1, 2. Der in Fig. 2 im Schnitt dargestellte Kupplungsaufbau bezieht sich hierbei auf ein Doppelrohr, bei dem das Innenrohr 2 lose im Außenrohr 1 "schwimmt". Hierbei ist es für den Durchflußquerschnitt unerheblich, ob das Innenrohr 2 einseitig an einer Rohrwand anliegt oder, wie im Ausführungsbeispiel nach Fig. 3 dargestellt, konzentrisch zum Außenrohr 1 gehalten wird.

Bei dieser Doppelrohrform ist das Innenrohr 2 zwecks Separierung der beiden Durchflußbereiche um soviel länger ausgebildet, daß die überstehenden Endstücke 18 in der Kupplungseinrichtung 3 mit dem Anfangsbereich der weiterführenden Einfachleitung 8 bzw. 11 direkt in Verbindung gebracht werden können.

Die auf diese Doppelrohrform passende Kupplungseinrichtung 3 besteht, wie aus Figur 2 ersichtlich, aus einem Kupplungsgehäuse 14 mit drei Kupplungsstellen 4, 5 und 6, die innerhalb des Gehäuses 14 durch Kanäle 15, 16 und 17 untereinander verbunden sind. Hierbei ist am Übergang vom Kanal 15 zum Kanal 16 eine Dichtung 19 vorgesehen, welche sich nach dem Einführen des Innenrohres 2 in den Kanal 16 fest an dem Außenmantel des Innenrohres 2 anlegt und so den Kanal 15 gegenüber dem Kanal 16 abdichtet. Beide Kanäle 15 und 16 liegen in einer geraden Linie, während der dritte Kanal 17 vor der Dichtung 19 zur Seite weggeführt ist.

Die Kupplungsstellen 4, 5 und 6 sind im wesentlichen alle nach dem gleichen Prinzip aufgebaut und sollen anhand der Kupplungsstelle 5 näher erläutert werden: Im Anschluß an den Verbindungskanal 16 kommt zunächst eine zylindrische Erweiterung 20, dessen Innendurchmesser dem Außendurchmesser des Einfachrohres 8 so angepaßt ist, daß dieses Rohr 8 leicht in die Erweiterung 20 eingeführt werden kann. Dann folgt eine zylindrische Kammer 21 zur Aufnahme von Dichtungsringen 22 und eine Dichtungsbuchse 23, welche die Kammer 21 abschließt und gleichzeitig als Zentrierung für das Einfachrohr 8 dient. Hinter der Dichtungsbuchse 23 sitzt ein Klemmring 24, der von einer Außenbuchse 25 fest gegen die Dichtungsbuchse 23 gedrückt wird. Der Klemmring 24 ist mit schräg nach innen abstehenden Greifzähnen 26 versehen, welche sich beim Einführen des Rohres 8 radial nach außen auffedern, beim Versuch des Herausziehens aber fest am Außenmantel des Rohres 8 anliegen, so daß eine Art Selbstblockierung eintritt. Damit ist das eingedrückte Kunststoffrohr 8 sicher gehalten und gut abgedichtet.

Will man das Rohr 8 dennoch lösen, so müssen die Greifzähne 26 zuerst nach außen gebogen werden. Zu diesem Zweck ist bei den Kupplungsstellen 5 und 6 noch ein sogenannter Demontagering 27 vorgesehen, der mit einem spitz zusammenlaufenden Innenring 28 gegen die Greifzähne 26 gedrückt wird, so daß diese sich vom Außenmantel des Rohres 8 bzw. 7 abheben und damit die Rohre freigeben.

An der Kupplungsstelle 4 ist ein solcher Demontagering 27 nicht vorgesehen, da das erfindungsgemäße Rohrleitungssystem aus einem Doppelrohr 1, 2 mit zwei fest montierten Kupplungseinrichtungen 3 besteht und als Einheit angeliefert und montiert wird. Selbstverständlich kann aber nach Wunsch des Kunden auch dort ein Demontagering 27 vorgesehen werden.

Es versteht sich, daß die Kupplungsstelle 5 nicht unbedingt mit der Kupplungseinrichtung 3 zusammenhängen muß. Sie kann auch mit der weiterführenden Leitung 8 verbunden sein. Wichtig ist nur, daß das Innenrohr 2 gegenüber dem Außenrohrkanal 15 vor dem Austritt aus dem Kupplungsgehäuse 14 gut abgedichtet ist und genügend weit aus diesem vorsteht, um auf irgend eine bekannte Weise mit dam Ende der weiterführenden Einfachleitung 8 durch eine ähnlich wirkende Schnellschlußkupplung verbunden werden zu können. Das gleiche gilt auch für die senkrecht abstehende Kupplungsstelle 6, die ebenso als einfacher Rohrstutzen ausgebildet sein kann, wenn das Verbindungsrohr 7 an seinem Ende mit einer entsprechenden Schnellschlußkupplung ausgestattet ist.

Die in Figur 2 dargestellte Kupplungsanordnung bietet jedoch den Vorteil, daß in einem gießtechnisch gut entformbaren Kupplungsgehäuse 14 alle drei Kupplungsstellen 4, 5, 6 leicht untergebracht werden können, so daß von allen Seiten nur noch die blanken Rohrenden oder gegebenenfalls deren Verbindungsstutzen eingekuppelt werden müssen. Auch bietet die vorliegende Kupplungsanordnung die Möglichkeit, an der engsten Stelle des Innenrohrkanals 16 eine Einengung 29 entsprechend dem Außendurchmesser der eingesteckten Rohrleitungen 7 oder 8 vorzusehen, die es gestattet, die Kupplungseinrichtung mit dem gleichen Leitungsclip an der Karosserie zu befestigen, mit dem auch die Doppelrohrleitung des ganzen Rohrleitungssystems und die Anschlußleitungen befestigt werden.

## Ansprüche

1. Rohrleitungssystem mit zwei Leitungssträngen und Kupplungseinrichtungen an den Enden zum Anschließen von weiterführenden Verbindungsleitungen,
**gekennzeichnet** durch ein zylindrisches Außenrohr (1) mit einem innenliegenden Zweitrohr (2), dessen Außendurchmesser entsprechend dem benötigten Durchflußquerschnitt kleiner ist als der Innendurchmesser des Außenrohres (1), sowie Kupplungseinrichtungen (3) mit jeweils einer Kupplungsstelle (4) zum Anschluß der Doppelleitung (1, 2) und jeweils zwei Kupplungsstellen (5, 6) zum Anschluß der weiterführenden Einfachleitungen (7, 8 bzw. 10, 11), wobei das Innenrohr (2) mit der einen Kupplungsstelle (5) und das Außenrohr (1) mit der anderen Kupplungsstelle (6) durch innerhalb der Kupplungseinrichtung (3) angeordnete Durchflußkanäle (15, 16, 17) verbunden ist.

2. Rohrleitungssystem nach Anspruch 1, dadurch gekennzeichnet, daß das innenliegende Zweitrohr (2) lose im Außenrohr (1) angeordnet ist und an beiden Enden (18) um eine solche Länge übersteht, die es ermöglicht, das Rohrende (18) durch einen zum Außenrohrkanal (15) abgedichteten Innenrohrkanal (16) bis in den Anfangsbereich der weiterführenden Einfachleitung (8) hinzuführen.

3. Kupplungseinrichtung für zwei konzentrisch herangeführte Leitungsrohre nach Anspruch 2, dadurch gekennzeichnet, daß die Kupplungsstelle (4) zur Aufnahme der Doppelleitung (1, 2) und die Kupplungsstelle (5) die Einfachleitung (8) zur Weiterführung des Durchflusses aus dem Innenrohr (2) mit den zugehörigen Verbindungskanälen (15 u. 16) in einer geraden Linie liegen, während der Verbindungskanal (17) zur anderen Kupplungsstelle (6) zwischen dem Außenrohrkanal (15) und dem abgedichteten Innenrohrkanal (16) seitlich weggeführt ist.

# FIG.1

# FIG.2

# FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 204 123 (HESS & CO.)<br>* Figur 2; Zusammenfassung *<br>----- | 1-3 | F 16 L 41/02<br>F 02 M 55/00 |

RECHERCHIERTE SACHGEBIETE (Int. Cl.4)

F 16 L
F 02 M

Der vorliegende Recherchenbericht wurde für alle Patentansprüche erstellt

| Recherchenort | Abschlußdatum der Recherche | Prüfer |
|---|---|---|
| DEN HAAG | 20-10-1988 | NARMINIO A. |

EPO FORM 1503 03.82 (P0403)